# EUROPÄISCHE PATENTSCHRIFT

(11) **EP 4 615 670 B1**
(45) Veröffentlichungstag und Bekanntmachung des Hinweises auf die Patenterteilung: **14.10.2026**
(21) Anmeldenummer: 23800463.4
(22) Anmeldetag: 03.11.2023
(51) Int. Cl.: B29C 49/12, B29C 49/42, B29C 49/46, B29C 49/58

(54) **VORRICHTUNG UND VERFAHREN ZUM HERSTELLEN EINES MIT FLÜSSIGEM FÜLLGUT BEFÜLLTEN BEHÄLTERS AUS EINEM THERMISCH KONDITIONIERTEN VORFORMLING**
DEVICE AND METHOD FOR PRODUCING A CONTAINER, FILLED WITH LIQUID FILLING MATERIAL, FROM A THERMALLY CONDITIONED PREFORM
DISPOSITIF ET PROCÉDÉ DE FABRICATION D'UN RÉCIPIENT, REMPLI D'UNE MATIÈRE DE REMPLISSAGE LIQUIDE, À PARTIR D'UNE PRÉFORME CONDITIONNÉE THERMIQUEMENT

(30) Priorität: 07.11.2022 DE 102022129297
(43) Veröffentlichungstag der Anmeldung: 17.09.2025
(73) Patentinhaber: KHS GmbH, 44143 Dortmund (DE)
(72) Erfinder: LINKE, Michael, 22159 Hamburg (DE); BAUMGARTE, Rolf, 22926 Ahrensburg (DE); LITZENBERG, Michael, 21039 Börnsen (DE)
(74) Vertreter: Eisenführ Speiser
(86) Internationale Anmeldenummer: PCT/EP2023/080651
(87) Internationale Veröffentlichungsnummer: WO 2024/099893

(56) Entgegenhaltungen:
- EP-A1- 2 821 204
- EP-A1- 2 823 948
- EP-A1- 3 381 652

## Beschreibung

Die Erfindung betrifft eine Vorrichtung und eine Anlage zum Herstellen eines mit flüssigem Füllgut befüllten Behälters aus einem thermisch konditionierten Vorformling. Ferner betrifft die Erfindung eine Verwendung einer solchen Vorrichtung und/oder einer solchen Anlage sowie ein Verfahren zum Reinigen einer Vorrichtung zum Herstellen eines mit flüssigem Füllgut befüllten Behälters aus einem thermisch konditionierten Vorformling.

Bekannt ist die Herstellung von Behältern durch Blasformen aus Vorformlingen aus einem thermoplastischen Material, beispielsweise aus Vorformlingen aus PET (Polyethylenterephthalat), wobei die Vorformlinge innerhalb einer Blasmaschine unterschiedlichen Bearbeitungsstationen zugeführt werden. Typischerweise weist eine Blasmaschine eine Heizvorrichtung zum Temperieren bzw. zum thermischen Konditionieren der Vorformlinge sowie eine Blaseinrichtung mit wenigstens einer Blasstation auf, in deren Bereich der jeweils zuvor temperaturkonditionierte Vorformling zu einem Behälter expandiert wird. Die Expansion erfolgt mit Hilfe eines Druckgases (Druckluft) als Druckmedium, das mit einem Formdruck in den zu expandierenden Vorformling eingeleitet wird. Der verfahrenstechnische Ablauf bei einer derartigen Expansion des Vorformlings wird in der DE 43 40 291 A1 erläutert. Der grundsätzliche Aufbau einer Blasstation ist in der DE 42 12 583 A1 beschrieben. Möglichkeiten der Temperierung der Vorformlinge sind beispielsweise in der DE 23 52 926 A1 erläutert. Unter Temperierung oder thermischer Konditionierung wird dabei verstanden, dass der Vorformling auf eine für die Blasumformung geeignete Temperatur erwärmt und dem Vorformling ggf. ein Temperaturprofil in Längsrichtung und/oder in Umfangsrichtung aufgeprägt wird. Die Blasformung von Behältern aus Vorformlingen unter zusätzlicher Verwendung einer Reckstange ist ebenfalls bekannt.

Gemäß einem typischen Weiterverarbeitungsverfahren werden die durch Blasformen hergestellten Behälter einer nachfolgenden Fülleinrichtung zugeführt und hier mit dem vorgesehenen Produkt oder Füllgut gefüllt. Es werden also eine separate Blasmaschine und eine separate Füllmaschine verwendet. Bekannt ist es dabei auch, die separate Blasmaschine und die separate Füllmaschine zu einem Maschinenblock, d.h. zu einer verblockten Blas-Füll-Einrichtung zusammenzufassen, wobei weiterhin das Blasformen und das Füllen an gesonderten Maschinenkomponenten und zeitlich nacheinander erfolgen.

Es wurde weiterhin bereits vorgeschlagen, Behälter, insbesondere auch in Form von Flaschen, aus thermisch konditionierten bzw. temperierten Vorformlingen herzustellen und dabei gleichzeitig mit einem flüssigen Füllgut zu befüllen, welches als hydraulisches Druckmedium zum Expandieren des Vorformlings bzw. zum Ausformen des Behälters mit einem Form- und Fülldruck zugeführt wird, sodass zeitgleich mit dem Füllen der jeweilige Vorformling in den Behälter umgeformt wird. Derartige Verfahren, bei denen ein gleichzeitiges Formen und Füllen des jeweiligen Behälters erfolgt, können auch als hydraulische Umformverfahren oder als hydraulische Behälterformung bezeichnet werden.

Auch hier ist es bekannt, diese Umformung durch den Einsatz einer Reckstange zu unterstützen. Auch hier wird der Vorformling vor dem Form- und Füllvorgang zunächst temperaturkonditioniert, das heißt auf eine für die hydraulische Umformung geeignete Temperatur erwärmt und ggf. ein Temperaturprofil aufgeprägt.

Bei einem Formen der Behälter aus den Vorformlingen durch das Füllgut selbst, d.h. unter Verwendung des Füllgutes als hydraulisches Druckmedium, wird für das Formen und Füllen der Behälter nur noch eine Maschine benötigt, die dafür allerdings eine erhöhte Komplexität aufweist. Ein Beispiel für eine solche Maschine zeigt die US 7,914,726 B2. Ein weiteres Beispiel zeigt die DE 10 2010 007 541 A1. Die vorliegende Erfindung betrifft das Formen der Behälter aus den Vorformlingen durch das Füllgut selbst und Maschinen, wie in den Beispielen offenbart, auf die daher explizit Bezug genommen wird.

Aus EP 2 821 204 A1 ist eine Behälterherstellungsvorrichtung bekannt, umfassend einen Einspritzkopf, der eine Fluidverbindung zwischen einer darin angeordneten Einspritzfluidöffnung und einem Vorformling herstellt, der in Verbindung mit einer Düse des Spritzkopfs angeordnet ist. Außerdem ist eine Dehnungsstange vorgesehen, die zwischen einer aus dem Einspritzkopf durch die Düse ragenden Position und einer im Wesentlichen zurückgezogenen Position beweglich ist. Die Vorrichtung umfasst ferner eine Reinigungskammer, die zumindest teilweise durch ein hohles, längliches Gehäuse begrenzt ist, das an den Einspritzkopf angrenzt und sich von diesem aus erstreckt. Die Dehnungsstange ist im Wesentlichen innerhalb der Reinigungskammer angeordnet, wenn sie in der im Wesentlichen zurückgezogenen Position angeordnet ist.

Ein Problem, das insbesondere bei einer Verwendung von Füllgut als hydraulisches Druckmedium zum Formen und Füllen der Behälter auftreten kann, liegt darin, dass beim Formen und Füllen typischerweise hohe Drücke im Inneren der Vorrichtung aufgebracht werden müssen und diese hohen Drücke die Zuverlässigkeit und/oder die Lebensdauer von in der Vorrichtung vorhandenen Dichtungen verringern können.

Um eine hygienische Herstellung von Behältern gewährleisten zu können, werden Vorrichtungen zum Herstellen von mit flüssigem Füllgut befüllten Behältern typischerweise regelmäßig Reinigungsprozessen unterzogen. Mittels solcher Reinigungsprozesse soll erreicht werden, dass Verunreinigungen wie Produktionsrückstände, Ablagerungen, Kalkrückstände, Zersetzungsprodukte, Schmutz und Keime entfernt werden.

Ein Problem, das bei der Durchführung solcher Reinigungsprozesse auftritt, besteht allerdings darin, dass auch nach der Durchführung solcher Reinigungsprozesse Rückstände in der Vorrichtung verbleiben können. Insbesondere im Bereich von Dichtungen kann eine rückstandslose Reinigung häufig nicht zufriedenstellend gewährleistet werden.

Der Erfindung liegt daher die Aufgabe zugrunde, eine verbesserte Lösung bereitzustellen, welche die genannten Probleme adressiert. Insbesondere ist es Aufgabe der Erfindung, eine Lösung bereitzustellen, die eine verbesserte, zuverlässige und hygienische Reinigung einer Vorrichtung zum Herstellen eines mit flüssigem Füllgut befüllten Behälters ermöglicht.

Gemäß einem ersten Aspekt wird die Aufgabe gelöst durch eine Vorrichtung mit den Merkmalen des Anspruchs 1. Vorgesehen ist eine Vorrichtung zum Herstellen eines mit flüssigem Füllgut befüllten Behälters aus einem thermisch konditionierten Vorformling, umfassend ein Füllventil für das Einleiten des Füllgutes unter Druck in den Vorformling, wobei das Füllventil einen Ventilkörper aufweist, der zwischen einer Dichtstellung, in der keine Fluidverbindung zwischen einem Füllgutdurchflussraum des Füllventils und dem Vorformling besteht, und einer Freigabestellung, in der eine Fluidverbindung zwischen dem Füllgutdurchflussraum des Füllventils und dem Vorformling besteht, bewegbar ist, wobei das Füllventil einen Ventilstößel und ein Gehäuse aufweist, wobei der Ventilstößel sich entlang einer Längsachse und zumindest teilweise innerhalb des Gehäuses erstreckt und entlang der Längsachse bewegbar ist, wobei der Ventilstößel ausgebildet ist, um den Ventilkörper des Füllventils, insbesondere mittels Bewegung des Ventilstößels entlang der Längsachse, zwischen der Dichtstellung und der Freigabestellung zu verstellen, eine erste Ventilstößeldichtung, die zwischen dem Ventilstößel und dem Gehäuse angeordnet ist und die den Füllgutdurchflussraum von einem Reinigungsraum trennt.

Erfindungsgemäß ist eine zweite Ventilstößeldichtung vorgesehen, die einen Verbindungsabschnitt aufweist, der mit dem Ventilstößel verbunden ist, wobei zwischen der zweiten Ventilstößeldichtung und dem Ventilstößel der Reinigungsraum ausgebildet ist, wobei der Ventilstößel in eine die Dichtwirkung der ersten Ventilstößeldichtung aufhebende und die Trennung zwischen dem Füllgutdurchflussraum und dem Reinigungsraum aufhebende Position bewegbar ist.

Erfindungsgemäß erfolgt also eine Verbindung zwischen dem Reinigungsraum und dem Füllgutdurchflussraum durch eine Bewegung des Ventilstößels aus einer dichtenden Position in eine die Dichtwirkung aufhebende Position. Diese gezielte Bewegung erfolgt in aller Regel zu einem Zeitpunkt, zu dem die Vorrichtung gereinigt werden soll, zu dem also insbesondere kein Behälter hergestellt wird und kein Füllgut in einen Vorformling eingeleitet wird.

Der Ausdruck: "die Dichtwirkung der ersten Ventilstößeldichtung aufhebende und die Trennung zwischen dem Füllgutdurchflussraum und dem Reinigungsraum aufhebende Position" wird im Folgenden auch lediglich als "aufhebende Position" bezeichnet.

Eine solche Vorrichtung ist vorzugsweise ausgebildet, um einen mit flüssigem Füllgut befüllten Behälter aus einem thermisch konditionierten Vorformling mittels Einleiten eines Füllguts unter Druck in den Vorformling herzustellen.

Vorzugsweise ist das Füllventil von einer Neutralstellung, in der das Füllventil mit seinem Auslass nicht dichtend an dem Vorformling anliegt, in eine Füllstellung, in der das Füllventil mit seinem Auslass dichtend an dem Vorformling anliegt, bewegbar. Wenn ein Vorformling hergestellt und gefüllt wird, ist das Füllventil in der Füllstellung angeordnet.

Der Ventilkörper ist von der Dichtstellung in die Freigabestellung bewegbar. Der Ventilkörper wird vorzugsweise zum Einleiten des Füllguts in den Vorformling in der Freigabestellung angeordnet, wobei in der Freigabestellung eine Fluidverbindung zwischen dem Füllgutdurchflussraum und dem Vorformling besteht, sodass entlang der Fluidverbindung Füllgut eingeleitet werden kann. In der Dichtstellung ist vorzugsweise die Verbindung zwischen dem Füllgutdurchflussraum innerhalb des Füllventils und dem Vorformling verschlossen, sodass in dieser Dichtstellung, die auch als Sperrstellung bezeichnet werden kann, kein Füllgut in den Vorformling eingeleitet werden kann.

Ein Herstellen und Füllen des Behälters mit dem flüssigen Füllgut kann vorzugsweise zumindest abschnittsweise gleichzeitig stattfinden.

Der Ventilstößel ist ausgebildet, um den Ventilkörper zwischen der Dichtstellung und der Freigabestellung zu verstellen. Der Ventilstößel und der Ventilkörper sind vorzugsweise miteinander gekoppelt und/oder verbunden. Der Ventilstößel und der Ventilkörper können insbesondere integral ausgebildet sein. Bevorzugt ist der Ventilkörper als ein Ende des Ventilstößels ausgebildet.

Die Längsachse ist vorzugsweise eine Achse, entlang welcher der Ventilstößel bewegbar ist. Die Längsachse ist vorzugsweise eine Gerade, die sich entlang der Bewegungsrichtung der Fülldüse erstreckt, wobei beispielsweise ein Bewegen der Fülldüse von der Füllstellung in die Neutralstellung mittels Anheben der Fülldüse erfolgen kann, wobei der aus dem Vorformling hergestellte und gefüllte Behälter seine Position nicht ändert, sodass die Fülldüse sich relativ zum Behälter von dem Behälter wegbewegt. Vorzugsweise erfolgt die Bewegung der Fülldüse dabei axial in Richtung und entlang der Längsachse.

Der Reinigungsraum ist vorzugsweise ein in dem Gehäuse angeordneter Raum, der vorzugsweise auf einer der Auslassöffnung des Füllventils gegenüberliegenden Seite des Füllgutdurchflussraum angeordnet ist. Der Reinigungsraum ist vorzugsweise im Herstellungsbetrieb von dem Füllgutdurchflussraum mittels der Dichtwirkung der ersten Ventilstößeldichtung fluidtechnisch getrennt.

Der Ventilstößel erstreckt sich vorzugsweise durch den Reinigungsraum hindurch. Der Ventilstößel erstreckt sich außerdem vorzugsweise zumindest teilweise innerhalb des Füllgutdurchflussraums.

Die erste Ventilstößeldichtung ist zwischen dem Ventilstößel und dem Gehäuse angeordnet. Die erste Ventilstößeldichtung ist vorzugsweise mit dem Gehäuse verbunden, wobei insbesondere der Ventilstößel relativ zur ersten Ventilstößeldichtung bewegbar ist. Die erste Ventilstößeldichtung ist insbesondere ausgebildet, um eine Dichtwirkung zwischen dem Ventilstößel und dem Gehäuse bereitzustellen, sodass keine Flüssigkeiten, insbesondere kein Füllgut, entlang der ersten Ventilstößeldichtung zwischen dem Füllgutdurchflussraum und dem Reinigungsraum, insbesondere zwischen dem Gehäuse und dem Ventilstößel, fließen kann, solange sich der Ventilstößel nicht in der die Dichtwirkung der ersten Ventilstößeldichtung aufhebenden Position befindet.

Die erste Ventilstößeldichtung kann also insbesondere eine Trennung zwischen Füllgutdurchflussraum und Reinigungsraum bewirken, wenn sich der Ventilstößel nicht in der die Dichtwirkung der ersten Ventilstößeldichtung aufhebenden Position befindet. Die erste Ventilstößeldichtung ist insbesondere zwischen dem Füllgutdurchflussraum und Reinigungsraum angeordnet. Die erste Ventilstößeldichtung ist vorzugsweise rotationssymmetrisch um die Längsachse ausgebildet.

Wenn der Ventilstößel in die die Dichtwirkung der ersten Ventilstößeldichtung aufhebende Position bewegt wird, wird die Trennung zwischen dem Füllgutdurchflussraum und dem Reinigungsraum aufgehoben, sodass insbesondere eine Fluidverbindung zwischen dem Füllgutdurchflussraum und dem Reinigungsraum hergestellt wird.

Die zweite Ventilstößeldichtung begrenzt vorzugsweise den Reinigungsraum. Die zweite Ventilstößeldichtung dichtet vorzugsweise den Reinigungsraum ab. Die zweite Ventilstößeldichtung ist vorzugsweise rotationssymmetrisch um die Längsachse ausgebildet.

Ein erster Vorteil einer solchen Vorrichtung besteht darin, dass, wenn ein Reinigungsmittel über den Füllgutdurchflussraum in den Reinigungsraum gelangt, die erste Ventilstößeldichtung beidseitig mit dem Reinigungsmittel in Kontakt kommen kann, wodurch die erste Ventilstößeldichtung beidseitig rückstandsfrei gereinigt werden kann. Dadurch wird eine verbesserte, zuverlässige, rückstandsfreie und hygienische Reinigung, insbesondere im Bereich der ersten Ventilstößeldichtung, ermöglicht.

Ein weiterer Vorteil einer solchen Vorrichtung besteht darin, dass die zweite Ventilstößeldichtung nicht den hohen Drücken, die typischerweise beim Formen und Füllen auftreten, ausgesetzt ist, da im Herstellbetrieb beim Formen und Füllen aufgrund der ersten Ventilstößeldichtung keine Fluidverbindung zwischen dem Füllgutdurchflussraum und dem Reinigungsraum besteht. Wenn der Ventilstößel in die die Dichtwirkung der ersten Ventilstößeldichtung aufhebenden Position bewegt wird, kann das Reinigungsmittel mit einem geringeren Druck in den Reinigungsraum eingeleitet werden. Dadurch, dass die zweite Ventilstößeldichtung somit keinen hohen Drücken ausgesetzt ist, weist diese Dichtung eine verbesserte und damit besonders hohe Lebensdauer auf.

Ein weiterer Vorteil besteht darin, dass selbst im Falle einer Undichtigkeit der ersten Ventilstößeldichtung Füllgut in dem Füllgutdurchflussraum und dem Reinigungsraum gehalten wird und daher beispielsweise nicht aus der Vorrichtung unkontrolliert austreten kann. Es ist ferner bei einer solchen Vorrichtung möglich, dass eine undichte erste Ventilstößeldichtung mittels eines Sensors erkannt wird, sodass die zweite Ventilstößeldichtung nur kurzzeitig einen Austritt von Füllgut verhindern muss.

Gemäß einer besonders bevorzugten Ausführungsform weist der Ventilstößel eine Querschnittsverjüngung auf, die angeordnet und ausgebildet ist, um in der die Dichtwirkung der ersten Ventilstößeldichtung aufhebenden Position des Ventilstößels den Füllgutdurchflussraum und den Reinigungsraum fluidtechnisch miteinander zu verbinden. Eine solche Querschnittsverjüngung kann insbesondere eine Fluidverbindung zwischen dem Füllgutdurchflussraum und dem Reinigungsraum ermöglichen. Über eine solche Querschnittsverjüngung kann ein Kanal für einen Durchfluss des Reinigungsmittels zwischen dem Füllgutdurchflussraum und dem Reinigungsraum bereitgestellt werden. Die Querschnittsverjüngung kann insbesondere in Form einer Taillierung des Ventilstößels ausgeführt sein.

Es ist besonders bevorzugt, dass die Querschnittsverjüngung des Ventilstößels in der Dichtstellung des Ventilkörpers, und vorzugsweise in der Freigabestellung des Ventilkörpers, in dem Bereich des Füllgutdurchflussraums angeordnet ist, und insbesondere von dem Füllgutdurchflussraum umgeben ist. Vorzugsweise befindet sich der Ventilstößel in der aufhebenden Position weder in der Stellung, in der der Ventilkörper in der Dichtstellung ist, noch in der Stellung, in der der Ventilkörper in der Freigabestellung ist. Vielmehr wird die aufhebende Position vorzugsweise dann erreicht, wen sich der Ventilstößel ausgehend von der Freigabestellung des Ventilkörpers noch weiter von dem Auslass des Füllventils wegbewegt. Vorzugsweise befindet sich der Ventilstößel in allen Positionen, in denen der Ventilkörper zwischen der Dichtstellung und der Freigabestellung angeordnet ist, nicht in der aufhebenden Position. So kann auf besonders vorteilhafte Weise im normalen Herstellungs- und Füllbetrieb die erste Ventilstößeldichtung eine Dichtwirkung für eine Abdichtung zwischen dem Füllgutdurchflussraum und dem Reinigungsraum bereitstellen.

Vorzugsweise ist die Querschnittsverjüngung des Ventilstößels in der Dichtstellung des Ventilkörpers und in der Freigabestellung des Ventilkörpers jeweils beabstandet zur ersten Ventilstößeldichtung angeordnet. Die Querschnittsverjüngung des Ventilstößels wird vorzugsweise erst dann in die aufhebende Position bewegt, wenn ausgehend von der Freigabestellung ein Reinigungshub des Ventilstößels ausgeführt wird. Dabei wird vorzugsweise der Ventilstößel ausgehend von der Freigabestellung noch weiter von dem Auslass des Füllventils wegbewegt, bis die Querschnittsverjüngung des Ventilstößels im Bereich der ersten Ventilstößeldichtung angeordnet ist.

Vorzugsweise ist die Querschnittsverjüngung des Ventilstößels in der aufhebenden Position des Ventilstößels im Bereich der ersten Ventilstößeldichtung angeordnet, sodass in dieser aufhebenden Position die erste Ventilstößeldichtung im Bereich der Querschnittsverjüngung zumindest teilweise keine Dichtwirkung mehr aufweist, also die Querschnittsverjüngung die erste Ventilstößeldichtung überbrückt. Die Querschnittsverjüngung erstreckt sich in der aufhebenden Position vorzugsweise entlang der ersten Ventilstößeldichtung, wobei vorzugsweise die Querschnittsverjüngung in Richtung parallel zur Längsachse größer ist als die Erstreckung der ersten Ventilstößeldichtung in Richtung parallel zur Längsachse.

Es ist besonders bevorzugt, dass der Ventilstößel in Richtung der Längsachse zu beiden Seiten der Querschnittsverjüngung einen gleichen Querschnitt aufweist. Der Querschnitt des Ventilstößels zu beiden Seiten der Querschnittsverjüngung ist vorzugsweise größer als der Querschnitt im Bereich der Querschnittsverjüngung. Im Bereich der Querschnittsverjüngung ist der Querschnitt des Ventilstößels somit vorzugsweise geringer als der Querschnitt des Ventilstößels im Übrigen.

Es ist besonders bevorzugt, dass der Ventilstößel einen sich zumindest teilweise entlang der Längsachse erstreckenden inneren Hohlraum aufweist, wobei der Ventilstößel mindestens eine Spülbohrung aufweist, die den inneren Hohlraum des Ventilstößels mit dem Reinigungsraum fluidtechnisch verbindet. Vorzugsweise erstreckt sich der innere Hohlraum entlang der gesamten Erstreckung des Ventilstößels in Richtung der Längsachse. Die Spülbohrung stellt vorzugsweise eine Fluidverbindung zwischen dem inneren Hohlraum und dem Reinigungsraum her, insbesondere um einen Durchfluss von Reinigungsmittel zwischen dem inneren Hohlraum und dem Reinigungsraum zu ermöglichen. Der Ventilstößel kann auch mehrere Spülbohrungen aufweisen, die beispielsweise bezogen auf die Längsachse auf einer Höhe umfänglich am Ventilstößel angeordnet sein können.

Es ist besonders bevorzugt, dass der innere Hohlraum mit einer Reinigungsrücklaufleitung fluidtechnisch verbunden und/oder verbindbar ist. Die Reinigungsrücklaufleitung ist vorzugsweise ausgebildet, um Reinigungsmittel aus der Vorrichtung herauszuführen. Vorzugsweise kann aber auch Reinigungsmittel über die Reinigungsrücklaufleitung in die Vorrichtung, insbesondere in den inneren Hohlraum, eingeleitet werden.

Es ist besonders bevorzugt, dass der Füllgutdurchflussraum mit einer Füllgutzulaufleitung und einer Reinigungszulaufleitung verbunden und/oder verbindbar ist, wobei vorzugsweise die Füllgutzulaufleitung und die Reinigungszulaufleitung zumindest abschnittsweise integral ausgebildet sind. Die Füllgutzulaufleitung ist vorzugsweise ausgebildet, um Reinigungsmittel in die Vorrichtung einzuleiten. Vorzugsweise kann aber auch Reinigungsmittel über die Füllgutzulaufleitung aus der Vorrichtung herausgeführt werden.

Es ist besonders bevorzugt, dass der Ventilstößel relativ zur ersten Ventilstößeldichtung bewegbar ist. Die erste Ventilstößeldichtung ist dabei insbesondere derart ausgebildet, dass trotz einer Relativbewegung zwischen dem Ventilstößel und der ersten Ventilstößeldichtung die erste Ventilstößeldichtung eine Dichtwirkung bereitstellen kann.

Es ist besonders bevorzugt, dass die erste Ventilstößeldichtung mit dem Gehäuse, insbesondere kraft- und/oder formschlüssig, verbunden ist. Die erste Ventilstößeldichtung ist vorzugsweise mit dem Gehäuse fest verbunden und bewegt sich nicht mit dem Ventilstößel mit.

Vorzugsweise ist die erste Ventilstößeldichtung als dynamische Stangendichtung ausgebildet. Die Ventilstößeldichtung ist vorzugsweise als dynamische translatorische Dichtung ausgebildet.

Es ist besonders bevorzugt, dass die zweite Ventilstößeldichtung in Form eines Faltenbalgs ausgebildet ist, wobei der Faltenbalg ein erstes Ende und ein zweites Ende aufweist, wobei der Verbindungsabschnitt das erste Ende des Faltenbalgs ausbildet, und wobei der Faltenbalg mit dem Verbindungsabschnitt mit dem Ventilstößel verbunden ist, wobei vorzugsweise das zweite Ende des Faltenbalgs mit dem Gehäuse verbunden ist. Unter einem Faltenbalg ist insbesondere ein elastisches, schlauchförmiges, insbesondere sich ziehharmonikaartig zusammenfaltbares, Bauteil zu verstehen. Der Faltenbalg dient insbesondere als Dichtung, mittels derer der Reinigungsraum abgedichtet und begrenzt wird. Der Faltenbalg erstreckt sich insbesondere von dem ersten Ende zu dem zweiten Ende. Das erste Ende des Faltenbalgs ist vorzugsweise fest mit dem Ventilstößel verbunden, sodass sich das erste Ende des Faltenbalgs bei einer Bewegung des Ventilstößels mit dem Ventilstößel mitbewegt. Das zweite Ende des Faltenbalgs ist vorzugsweise fest mit dem Gehäuse verbunden.

Die zweite Ventilstößeldichtung ist vorzugsweise elastisch verformbar. Die zweite Ventilstößeldichtung kann auch in Form einer Membran oder in Form eines Rollbalgs ausgebildet sein.

Es ist besonders bevorzugt, dass die mindestens eine Spülbohrung bezogen auf die Längsachse zwischen der ersten Ventilstößeldichtung und dem Verbindungsabschnitt der zweiten Ventilstößeldichtung angeordnet ist, insbesondere für jede Betriebsstellung des Ventilstößels aufgrund seiner Beweglichkeit entlang der Längsachse. Durch eine solche Anordnung der Spülbohrung kann auf besonders vorteilhafte Weise erreicht werden, dass im Herstellungsbetrieb kein Füllgut in die Spülbohrung - und damit in den inneren Hohlraum des Ventilstößels - gelangen kann. Außerdem ermöglicht diese Anordnung der Spülbohrung, dass zwischen dem Reinigungsraum und dem inneren Hohlraum des Ventilstößels eine Fluidverbindung besteht, sodass, insbesondere bei einer Anordnung des Ventilstößels in der aufhebenden Stellung, ein Reinigungsmittel von dem Reinigungsraum in den inneren Hohlraum des Ventilstößels überführt werden kann.

Es ist besonders bevorzugt, dass die Vorrichtung umfasst: eine Reckstange, die sich zumindest abschnittsweise innerhalb des Ventilstößels, und vorzugsweise entlang der Längsachse, erstreckt, wobei die Reckstange, vorzugsweise entlang der Längsachse, in den Vorformling hinein bewegbar ist, um den Vorformling entlang seiner Längsachse zu recken. Vorzugsweise ist eine Reckstangendichtung zwischen der Reckstange und dem Ventilstößel angeordnet, wobei die Reckstangendichtung vorzugsweise einen auslassseitigen Raum von dem inneren Hohlraum trennt. Die Reckstangendichtung ist vorzugsweise rotationssymmetrisch um die Längsachse ausgebildet.

Die Reckstange ist vorzugsweise axialbeweglich innerhalb des umgebenden Füllventils angeordnet. Für die Abdichtung der beweglichen Reckstange gegenüber dem umgebenden Füllventil ist insbesondere die die Reckstange umgebende Reckstangendichtung vorgesehen. Die Reckstange erstreckt sich vorzugsweise entlang der Längsachse. Die Reckstange kann einen runden Querschnitt aufweisen und rotationssymmetrisch um die Längsachse ausgebildet sein. Die Reckstange erstreckt sich bevorzugt innerhalb des Ventilkörpers. Die Reckstange kann vorzugsweise relativ zum Ventilkörper entlang der Längsachse bewegt werden und insbesondere in Richtung des Vorformlings bewegt werden, um den Vorformling zu recken.

Es ist besonders bevorzugt, dass in dem Bereich, in dem die Reckstange innerhalb des Ventilstößels verläuft, der innere Hohlraum zwischen der Reckstange und dem Ventilstößel ausgebildet ist. Der innere Hohlraum kann insbesondere entlang eines Abschnitts des inneren Hohlraums zwischen der Reckstange und dem Ventilstößel ausgebildet sein.

Gemäß einem weiteren Aspekt wird die eingangs genannte Aufgabe gelöst durch eine Anlage zum Herstellen von mit flüssigem Füllgut befüllten Behältern aus thermisch konditionierten Vorformlingen mittels Einleiten eines Füllguts unter Druck in die Vorformlinge mit einer wie hier beschriebenen Vorrichtung, vorzugsweise umfassend mehrere Form- und Füllstationen, wobei jede der Form- und Füllstationen eine wie hier beschriebene Vorrichtung aufweist.

Gemäß einem weiteren Aspekt wird die eingangs genannte Aufgabe gelöst durch ein Verfahren zum Reinigen einer Vorrichtung zum Herstellen eines mit flüssigem Füllgut befüllten Behälters aus einem thermisch konditionierten Vorformling, umfassend die folgenden Schritte: Bereitstellen einer Vorrichtung, insbesondere einer wie hier beschriebenen Vorrichtung, zum Herstellen eines mit flüssigem Füllgut befüllten Behälters aus einem thermisch konditionierten Vorformling, umfassend ein Füllventil, aufweisend einen Ventilstößel und ein Gehäuse, wobei der Ventilstößel sich entlang einer Längsachse und zumindest teilweise innerhalb des Gehäuses erstreckt und entlang der Längsachse bewegbar ist, wobei der Ventilstößel einen sich zumindest teilweise entlang der Längsachse erstreckenden inneren Hohlraum aufweist, eine erste Ventilstößeldichtung, die zwischen dem Ventilstößel und dem Gehäuse angeordnet ist und die einen Füllgutdurchflussraum des Füllventils von einem Reinigungsraum trennt, und eine zweite Ventilstößeldichtung, die einen Verbindungsabschnitt aufweist, der mit dem Ventilstößel verbunden ist, wobei zwischen der zweiten Ventilstößeldichtung und dem Ventilstößel der Reinigungsraum ausgebildet ist, Bewegen des Ventilstößels in eine die Dichtwirkung der ersten Ventilstößeldichtung aufhebende und die Trennung zwischen dem Füllgutdurchflussraum des Füllventils und dem Reinigungsraum aufhebende Position, Durchführen eines Reinigungsprozesses, wobei ein Reinigungsmittel unter Druck in den Füllgutdurchflussraum eingeführt wird und von dem Füllgutdurchflussraum entlang der ersten Ventilstößeldichtung in den Reinigungsraum geführt wird, wobei vorzugsweise das Reinigungsmittel von dem Reinigungsraum in den inneren Hohlraum geführt wird und durch den inneren Hohlraum über eine Reinigungsrücklaufleitung aus der Vorrichtung herausgeführt wird, oder wobei ein Reinigungsmittel unter Druck in eine Reinigungsrücklaufleitung eingeführt wird und von der Reinigungsrücklaufleitung in den inneren Hohlraum geführt wird, wobei das Reinigungsmittel von dem inneren Hohlraum in den Reinigungsraum geführt wird und entlang der ersten Ventilstößeldichtung in den Füllgutdurchflussraum geführt wird, wobei das Reinigungsmittel vorzugsweise über eine Füllgutzulaufleitung aus der Vorrichtung herausgeführt wird.

Das Durchführen des Reinigungsprozesses umfasst vorzugsweise ein Einführen des Reinigungsmittels unter Druck in den Füllgutdurchflussraum. Vorzugsweise wird das Reinigungsmittel entlang der ersten Ventilstößeldichtung in den Reinigungsraum geführt, wobei der Ventilstößel in der aufhebenden Position angeordnet ist. Anschließend wird das Reinigungsmittel vorzugsweise von dem Reinigungsraum in den inneren Hohlraum geführt und durch den inneren Hohlraum über eine Reinigungsrücklaufleitung aus der Vorrichtung herausgeführt.

Das Durchführen des Reinigungsprozesses kann jedoch vorzugsweise auch mit einer umgekehrten Strömungsrichtung des Reinigungsmittels erfolgen, wobei das Reinigungsmittel unter Druck in die Reinigungsrücklaufleitung eingeführt wird und von der Reinigungsrücklaufleitung in den inneren Hohlraum geführt wird. Anschließend wird das Reinigungsmittel vorzugsweise von dem inneren Hohlraum in den Reinigungsraum geführt und entlang der ersten Ventilstößeldichtung in den Füllgutdurchflussraum geführt. Das Reinigungsmittel kann dann vorzugsweise über die Füllgutzulaufleitung aus der Vorrichtung herausgeführt werden.

Es ist besonders bevorzugt, dass der Druck, bei dem das Reinigungsmittel unter Druck in den Füllgutdurchflussraum eingeführt wird, geringer ist, vorzugsweise um ein Vielfaches geringer ist, als der Druck, der beim Einleiten von Füllgut in den Vorformling anliegt.

Dadurch kann auf besonders vorteilhafte Weise erreicht werden, dass der Druck, mit der die zweite Ventilstößeldichtung beaufschlagt wird, deutlich geringer ist, als der Druck, mit der die erste Ventilstößeldichtung beim Herstellprozess beaufschlagt wird. Da die zweite Ventilstößeldichtung somit geringeren Drücken ausgesetzt ist, weist die zweite Ventilstößeldichtung eine verbesserte Lebensdauer auf. Dadurch können insbesondere Inspektionsintervalle und Wartungsintervalle verlängert werden und Materialkosten verringert werden.

Vorzugsweise beträgt der Druck, bei dem das Reinigungsmittel in den Füllgutdurchflussraum eingeführt wird, mindestens 1 bar und vorzugsweise höchstens 10 bar, besonders bevorzugt höchstens 8 bar, insbesondere höchstens 6 bar. Vorzugsweise beträgt der Druck, der beim Einleiten von Füllgut in den Vorformling anliegt, mindestens 10 bar, besonders bevorzugt mindestens 15 bar, und vorzugsweise höchstens 30 bar, besonders bevorzugt höchstens 25 bar.

Gemäß einem weiteren Aspekt wird die eingangs genannte Aufgabe gelöst durch eine Verwendung einer wie hier beschriebenen Vorrichtung und/oder einer wie hier beschriebenen Anlage zum Herstellen von mit flüssigem Füllgut befüllten Behältern aus thermisch konditionierten Vorformlingen mittels Einleiten eines Füllguts unter Druck in die Vorformlinge, insbesondere zum Herstellen von mit flüssigem Füllgut, beispielsweise Trinkwasser, befüllten Flaschen aus einem thermoplastischen Material, insbesondere umfassend oder bestehend aus PET.

Zu den Vorteilen, Ausführungsvarianten und Ausführungsdetails der verschiedenen Aspekte der hier beschriebenen Lösungen und ihrer jeweiligen möglichen Fortbildungen wird auch auf die Beschreibung zu den entsprechenden Merkmalen, Details und Vorteilen der jeweils anderen Aspekte und ihrer Fortbildungen verwiesen.

Bevorzugte Ausführungsbeispiele werden beispielhaft anhand der beiliegenden Figuren erläutert. Die Zeichnungen sind nicht unbedingt maßstabsgetreu. In den Figuren sind gleiche oder im Wesentlichen funktionsgleiche bzw. -ähnliche Elemente mit den gleichen Bezugszeichen bezeichnet. Es zeigen:
- Fig. 1:: eine schematische Schnittdarstellung einer Vorrichtung zum Herstellen eines mit flüssigem Füllgut befüllten Behälters; und
- Fig. 2:: eine schematische Darstellung eines Verfahrens zum Reinigen einer Vorrichtung zum Herstellen eines mit flüssigem Füllgut befüllten Behälters.

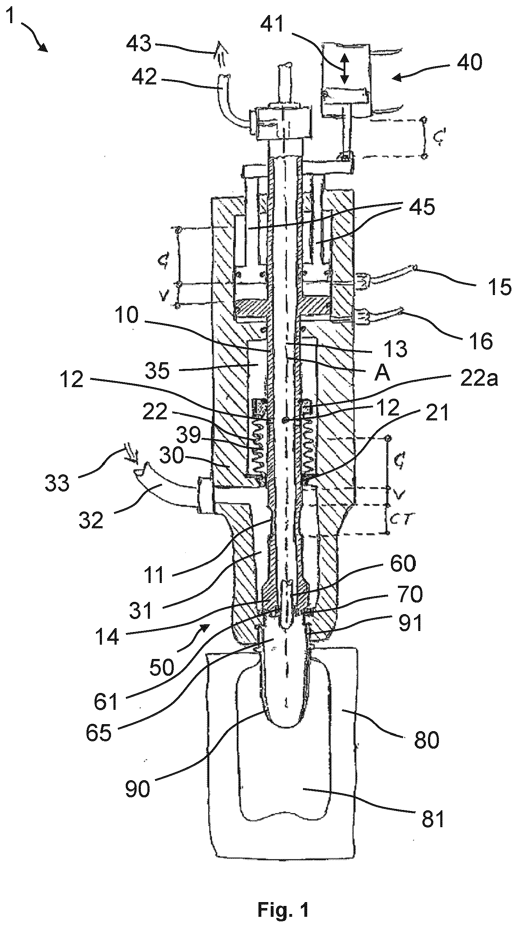

Fig. 1 zeigt eine schematische Schnittdarstellung einer Vorrichtung 1 zum Herstellen eines mit flüssigem Füllgut befüllten Behälters.

Die Vorrichtung 1 weist ein Füllventil 50 auf, das ausgebildet ist, um Füllgut unter Druck in den Vorformling 90 einzuleiten. Dabei wird das Füllgut als hydraulisches Druckmedium zum Expandieren des Vorformlings 90 bzw. zum Ausformen des Behälters mit einem Formund Fülldruck zugeführt, sodass zeitgleich mit dem Füllen des Vorformlings 90 der Vorformling 90 in einen Behälter umgeformt wird. Das Füllventil 50 weist einen Ventilkörper 14 auf, der zwischen einer Dichtstellung, in der keine Fluidverbindung zwischen einem Füllgutdurchflussraum 31 des Füllventils 50 und dem Vorformling 90 besteht, und einer Freigabestellung, in der eine Fluidverbindung zwischen dem Füllgutdurchflussraum 31 des Füllventils 50 und dem Vorformling 90 besteht, bewegbar ist. In der hier in Fig. 1 gezeigten Stellung ist der Ventilkörper 14 in der Dichtstellung angeordnet, in der keine Fluidverbindung zwischen dem Füllgutdurchflussraum 31 des Füllventils 50 und dem Vorformling 90 besteht.

Das Füllventil 50 weist einen Ventilstößel 10 und ein Gehäuse 30 auf, wobei der Ventilstößel 10 sich entlang einer Längsachse A und innerhalb des Gehäuses 30 erstreckt und entlang der Längsachse A bewegbar ist. Der Ventilstößel 10 ist ausgebildet, um den Ventilkörper 14 des Füllventils 50 mittels Bewegung des Ventilstößels 10 entlang der Längsachse A, zwischen der Dichtstellung und der Freigabestellung zu verstellen. Um also den Ventilkörper 14 aus der hier in Fig. 1 gezeigten Dichtstellung in die Freigabestellung zu bewegen, muss der Ventilkörper 14 entlang der Längsachse vom Vorformling 90 wegbewegt werden. Eine solche Bewegung des Ventilkörpers 14 wird durch eine entsprechende Bewegung des Ventilstößels 10 entlang der Längsachse A bewirkt. Der Ventilkörper 14 und der Ventilstößel 10 sind in dem hier gezeigten Ausführungsbeispiel integral ausgebildet. Der Ventilkörper 14 bildet somit den Endabschnitt des Ventilstößels 10 aus. Somit folgt der Ventilkörper 14 bei der hier gezeigten Ausführungsform genau der Bewegung des Ventilstößels 10. Der Weg, den der Ventilstößel 10 zwischen der hier gezeigten Dichtstellung und der Freigabestellung zurücklegt, wird als Ventilhub bezeichnet und ist in Fig. 1 als Ventilhub V eingezeichnet. In der Dichtstellung dichtet eine Auslassdichtung 70 des Füllventils 50 den Füllgutdurchflussraum 31 zu einem auslassseitigen Raum 65 ab. In der Freigabestellung besteht hingegen eine Fluidverbindung zwischen dem Füllgutdurchflussraum 31 und dem auslassseitigen Raum 65, sodass Füllgut in den Vorformling 90 eingeleitet werden kann.

Wenn der Ventilkörper in der Freigabestellung angeordnet ist, kann Füllgut über eine Füllgutzulaufleitung 32 in der mit 33 eingezeichneten Richtung zunächst in den Füllgutdurchflussraum 31 und dann von dem Füllgutdurchflussraum 31 zum auslassseitigen Raum 65 in den Vorformling 90 eingeleitet werden. Der Vorformling 90 weist einen Mündungsbereich 91 auf, auf den ein Deckel aufschraubbar ist. Der Vorformling 90 ist mit dem Mündungsbereich an dem Füllventil 50 angeordnet. Der Vorformling 90 kann gegen eine Form 80, die mehrere Formteile umfasst, einen von Formhälften gebildeten Raum 81 ausbildet und hier nur schematisch dargestellt ist, expandiert werden, sodass aus dem Vorformling 90 ein Behälter hergestellt wird.

Die Vorrichtung 1 weist eine Reckstange 60 auf, die innerhalb des Ventilstößels 10 angeordnet ist und die axial entlang der Längsachse A bewegbar ist. Zwischen der Reckstange 60 und dem Ventilstößel 10 ist eine Reckstangendichtung 61 angeordnet. Die Reckstange 60 kann in den Vorformling 90 bewegt werden und den Vorformling 90 entlang der Längsachse A recken.

Die Vorrichtung 1 weist ferner eine erste Ventilstößeldichtung 21 auf, die zwischen dem Ventilstößel 10 und dem Gehäuse 30 angeordnet ist und die den Füllgutdurchflussraum 31 von dem Reinigungsraum 39 trennt. Außerdem ist eine zweite Ventilstößeldichtung 22 vorgesehen, die einen Verbindungsabschnitt 22a aufweist, der mit dem Ventilstößel 10 verbunden ist, wobei zwischen der zweiten Ventilstößeldichtung 22 und dem Ventilstößel 10 der Reinigungsraum 39 ausgebildet ist.

Der Ventilstößel 10 ist in eine die Dichtwirkung der ersten Ventilstößeldichtung 21 aufhebende und die Trennung zwischen dem Füllgutdurchflussraum 31 und dem Reinigungsraum 39 aufhebende Position bewegbar.

Der Ventilstößel 10 weist eine Querschnittsverjüngung 11 auf, die angeordnet und ausgebildet ist, um in der die Dichtwirkung der ersten Ventilstößeldichtung 21 aufhebenden Position des Ventilstößels 10 den Füllgutdurchflussraum 31 und den Reinigungsraum 39 fluidtechnisch miteinander zu verbinden.

Der Ventilstößel 10 kann dann in die aufhebende Position bewegt werden, indem der Ventilstößel 10 in Richtung der Längsachse A einen Reinigungshub C ausführt, also eine Bewegung entlang der Längsachse um den in Fig. 1 mit C eingezeichneten Weg ausführt. Nach einer solchen Bewegung des Ventilstößels 10 ist die Querschnittsverjüngung 11 derart im Bereich der ersten Ventilstößeldichtung 21 angeordnet, dass die Dichtwirkung der ersten Ventilstößeldichtung 21 aufgehoben wird und eine Fluidverbindung von dem Füllgutdurchflussraum 31 entlang der ersten Ventilstößeldichtung 21 zu dem Reinigungsraum 39 besteht. Die Querschnittsverjüngung 11 erstreckt sich entlang der Längsachse A entlang eines Querschnittsverjüngungsbereichs CT und überbrückt in der aufhebenden Position damit die erste Ventilstößeldichtung 21.

Der Antrieb 40 des Reinigungshubs ist hier schematisch in Form eines in Richtung 41 beweglichen Reinigungshubantriebzylinders dargestellt, mit dem die Reinigungshubzylinder 45 bewegt werden können.

Die Querschnittsverjüngung 11 des Ventilstößels 10 ist in der Dichtstellung des Ventilkörpers 14 und auch in der Freigabestellung des Ventilkörpers 14, in dem Bereich des Füllgutdurchflussraums 31 angeordnet. Die Querschnittsverjüngung 11 des Ventilstößels 10 ist in der Dichtstellung des Ventilkörpers 14 und in der Freigabestellung des Ventilkörpers 14 jeweils beabstandet zur ersten Ventilstößeldichtung 21 angeordnet.

Der Ventilstößel 10 weist einen sich entlang der Längsachse A erstreckenden inneren Hohlraum 13 auf. Der Ventilstößel 10 weist außerdem mindestens eine Spülbohrung 12 auf, die den inneren Hohlraum 13 des Ventilstößels 10 mit dem Reinigungsraum 39 fluidtechnisch verbindet. Der innere Hohlraum 13 ist mit einer Reinigungsrücklaufleitung 42 fluidtechnisch verbunden. Der Füllgutdurchflussraum 31 ist mit einer Füllgutzulaufleitung 32 und einer Reinigungszulaufleitung 32 verbunden, wobei die Füllgutzulaufleitung 32 und die Reinigungszulaufleitung 32 in der hier gezeigten Ausführungsform integral ausgebildet sind.

Die mindestens eine Spülbohrung 12 ist bezogen auf die Längsachse A zwischen der ersten Ventilstößeldichtung 21 und dem Verbindungsabschnitt 22a der zweiten Ventilstößeldichtung 22 angeordnet.

Die erste Ventilstößeldichtung 21 ist mit dem Gehäuse 30 kraft- und/oder formschlüssig verbunden. Die erste Ventilstößeldichtung 21 ist hier als dynamische Stangendichtung ausgebildet.

Die zweite Ventilstößeldichtung 22 ist in Form eines Faltenbalgs ausgebildet, wobei der Faltenbalg 22 ein erstes Ende und ein zweites Ende aufweist, wobei der Verbindungsabschnitt 22a das erste Ende des Faltenbalgs 22 ausbildet, und wobei der Faltenbalg 22 mit dem Verbindungsabschnitt 22a mit dem Ventilstößel 10 verbunden ist. Der Faltenbalg 22 ist außerdem mit seinem zweiten Ende mit dem Gehäuse 30 verbunden.

Mittels des Faltenbalgs 22 kann der Reinigungsraum 39 fluidtechnisch von einem auf der anderen Seite des Faltenbalgs 22 angeordneten druckentlasteten Raum 35 getrennt werden.

Ein Reinigungsprozess ist durchführbar, wenn der Ventilstößel 10 in der aufhebenden Position angeordnet ist. Dann wird ein Reinigungsmittel in Richtung des Pfeils 33 über eine Füllgutzulaufleitung 32 unter Druck in den Füllgutdurchflussraum 31 eingeführt und von dem Füllgutdurchflussraum 31 entlang der ersten Ventilstößeldichtung 21 in den Reinigungsraum 39 geführt. Das Reinigungsmittel wird dann von dem Reinigungsraum 39 in den inneren Hohlraum 13 geführt und anschließend durch den inneren Hohlraum 13 über eine Reinigungsrücklaufleitung 42 aus der Vorrichtung 1 in Richtung des Pfeils 43 herausgeführt.

Ein Antrieb 15 für das Füllventil 50 und eine Ventilhubleitung 16, hier jeweils lediglich schematisch dargestellt, ermöglichen ein Verstellen des Ventilstößels 10 in axialer Richtung von der Dichtstellung in die Freigabestellung, indem damit eine mit dem Ventilstößel 10 gekoppelte Kolbenanordnung in Richtung der Längsachse A bewegt werden kann.

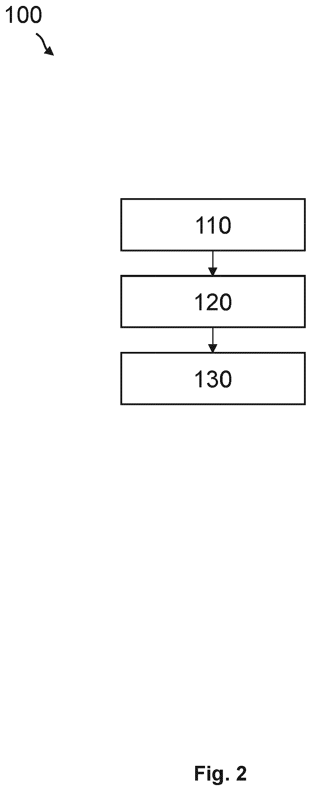

Fig. 2 zeigt eine schematische Darstellung eines Verfahrens 100 zum Reinigen einer Vorrichtung zum Herstellen eines mit flüssigem Füllgut befüllten Behälters aus einem thermisch konditionierten Vorformling. Das Verfahren umfasst die folgenden Schritte:

In einem Schritt 110, Bereitstellen einer Vorrichtung 1 zum Herstellen eines mit flüssigem Füllgut befüllten Behälters aus einem thermisch konditionierten Vorformling 90, umfassend ein Füllventil 50, aufweisend einen Ventilstößel 10 und ein Gehäuse 30, wobei der Ventilstößel 10 sich entlang einer Längsachse A und zumindest teilweise innerhalb des Gehäuses 30 erstreckt und entlang der Längsachse A bewegbar ist, wobei der Ventilstößel 10 einen sich zumindest teilweise entlang der Längsachse A erstreckenden inneren Hohlraum 13 aufweist, eine erste Ventilstößeldichtung 21, die zwischen dem Ventilstößel 10 und dem Gehäuse 30 angeordnet ist und die einen Füllgutdurchflussraum 31 des Füllventils 50 von einem Reinigungsraum 39 trennt, und eine zweite Ventilstößeldichtung 22, die einen Verbindungsabschnitt 22a aufweist, der mit dem Ventilstößel 10 verbunden ist, wobei zwischen der zweiten Ventilstößeldichtung 22 und dem Ventilstößel 10 der Reinigungsraum 39 ausgebildet ist.

In einem Schritt 120, Bewegen des Ventilstößels 10 in eine die Dichtwirkung der ersten Ventilstößeldichtung 21 aufhebende und die Trennung zwischen dem Füllgutdurchflussraum 31 des Füllventils 50 und dem Reinigungsraum 39 aufhebende Position.

In einem Schritt 130, Durchführen eines Reinigungsprozesses, wobei ein Reinigungsmittel unter Druck in den Füllgutdurchflussraum 31 eingeführt wird und von dem Füllgutdurchflussraum 31 entlang der ersten Ventilstößeldichtung 21 in den Reinigungsraum 39 geführt wird, wobei vorzugsweise das Reinigungsmittel von dem Reinigungsraum 39 in den inneren Hohlraum 13 geführt wird und durch den inneren Hohlraum 13 über eine Reinigungsrücklaufleitung 42 aus der Vorrichtung 1 herausgeführt wird, oder wobei ein Reinigungsmittel unter Druck in eine Reinigungsrücklaufleitung 42 eingeführt wird und von der Reinigungsrücklaufleitung 42 in den inneren Hohlraum 13 geführt wird, wobei das Reinigungsmittel von dem inneren Hohlraum 13 in den Reinigungsraum 39 geführt wird und entlang der ersten Ventilstößeldichtung 21 in den Füllgutdurchflussraum 31 geführt wird, wobei das Reinigungsmittel vorzugsweise über eine Füllgutzulaufleitung 32 aus der Vorrichtung 1 herausgeführt wird. Der Druck, bei dem das Reinigungsmittel unter Druck in den Füllgutdurchflussraum 31 eingeführt wird, ist in dem hier beispielhaft beschriebenen Verfahren um ein Vielfaches geringer als der Druck, der beim Einleiten von Füllgut in den Vorformling 90 anliegt.

### Bezugszeichenliste

- 1: Vorrichtung
- 10: Ventilstößel
- 11: Querschnittsverjüngung
- 12: Spülbohrung
- 13: innerer Hohlraum des Ventilstößels
- 14: Ventilkörper
- 15: Antrieb für das Füllventil
- 16: Ventilhubleitung
- 21: erste Ventilstößeldichtung
- 22: zweite Ventilstößeldichtung
- 22a: Verbindungsabschnitt der zweiten Ventilstößeldichtung
- 30: Gehäuse
- 31: Füllgutdurchflussraum
- 32: Füllgutzulaufleitung
- 33: Richtung, in der Füllgut oder Reinigungsmittel in den Füllgutdurchflussraum eingeleitet werden können
- 35: druckentlasteter Raum
- 39: Reinigungsraum
- 40: Antrieb für Reinigungshub
- 41: Bewegung des Reinigungshubantriebzylinders
- 42: Reinigungsrücklaufleitung
- 43: Richtung, in der das Reinigungsmittel aus der Vorrichtung herausgeführt werden kann
- 45: Reinigungshubzylinder
- 50: Füllventil
- 60: Reckstange
- 61: Reckstangendichtung
- 65: auslassseitiger Raum
- 70: Auslassdichtung
- 80: Formhälften
- 81: von Formhälften gebildeter Raum
- 90: Vorformling
- 91: Mündungsbereich
- 100: Verfahren
- 110: Bereitstellen einer Vorrichtung
- 120: Bewegen des Ventilstößels in eine die Dichtwirkung der ersten Ventilstößeldichtung aufhebende Position
- 130: Durchführen eines Reinigungsprozesses
- A: Längsachse
- C: Reinigungshub
- CT: Querschnittsverjüngungsbereich
- V: Ventilhub

## Patentansprüche

1. Vorrichtung (1) zum Herstellen eines mit flüssigem Füllgut befüllten Behälters aus einem thermisch konditionierten Vorformling (90), umfassend
- ein Füllventil (50) für das Einleiten des Füllgutes unter Druck in den Vorformling (90), wobei das Füllventil (50) einen Ventilkörper (14) aufweist, der zwischen einer Dichtstellung, in der keine Fluidverbindung zwischen einem Füllgutdurchflussraum (31) des Füllventils (50) und dem Vorformling (90) besteht, und einer Freigabestellung, in der eine Fluidverbindung zwischen dem Füllgutdurchflussraum (31) des Füllventils (50) und dem Vorformling (90) besteht, bewegbar ist,
- wobei das Füllventil (50) einen Ventilstößel (10) und ein Gehäuse (30) aufweist, wobei der Ventilstößel (10) sich entlang einer Längsachse (A) und zumindest teilweise innerhalb des Gehäuses (30) erstreckt und entlang der Längsachse (A) bewegbar ist, wobei der Ventilstößel (10) ausgebildet ist, um den Ventilkörper (14) des Füllventils (50), insbesondere mittels Bewegung des Ventilstößels (10) entlang der Längsachse (A), zwischen der Dichtstellung und der Freigabestellung zu verstellen,
- eine erste Ventilstößeldichtung (21), die zwischen dem Ventilstößel (10) und dem Gehäuse (30) angeordnet ist und die den Füllgutdurchflussraum (31) von einem Reinigungsraum (39) trennt,
**gekennzeichnet durch**
- eine zweite Ventilstößeldichtung (22), die einen Verbindungsabschnitt (22a) aufweist, der mit dem Ventilstößel (10) verbunden ist, wobei zwischen der zweiten Ventilstößeldichtung (22) und dem Ventilstößel (10) der Reinigungsraum (39) ausgebildet ist,
- wobei der Ventilstößel (10) in eine die Dichtwirkung der ersten Ventilstößeldichtung (21) aufhebende und die Trennung zwischen dem Füllgutdurchflussraum (31) und dem Reinigungsraum (39) aufhebende Position bewegbar ist.

2. Vorrichtung nach dem vorhergehenden Anspruch,
wobei der Ventilstößel (10) eine Querschnittsverjüngung (11) aufweist, die angeordnet und ausgebildet ist, um in der die Dichtwirkung der ersten Ventilstößeldichtung (21) aufhebenden Position des Ventilstößels (10) den Füllgutdurchflussraum (31) und den Reinigungsraum (39) fluidtechnisch miteinander zu verbinden.

3. Vorrichtung nach einem der vorhergehenden Ansprüche,
wobei die Querschnittsverjüngung (11) des Ventilstößels (10) in der Dichtstellung des Ventilkörpers (14), und vorzugsweise in der Freigabestellung des Ventilkörpers (14), in dem Bereich des Füllgutdurchflussraums (31) angeordnet ist, und insbesondere von dem Füllgutdurchflussraum (31) umgeben ist,
und/oder wobei die Querschnittsverjüngung (11) des Ventilstößels (10) in der Dichtstellung des Ventilkörpers (14) und in der Freigabestellung des Ventilkörpers (14) jeweils beabstandet zur ersten Ventilstößeldichtung (21) angeordnet ist,
und/oder wobei die Querschnittsverjüngung (11) des Ventilstößels (10) in der aufhebenden Position des Ventilstößels (10) im Bereich der ersten Ventilstößeldichtung (21) angeordnet ist, sodass in dieser aufhebenden Position die erste Ventilstößeldichtung (21) im Bereich der Querschnittsverjüngung (11) zumindest teilweise keine Dichtwirkung mehr aufweist, also die Querschnittsverjüngung (11) die erste Ventilstößeldichtung (21) überbrückt.

4. Vorrichtung nach einem der vorhergehenden Ansprüche,
wobei der Ventilstößel (10) in Richtung der Längsachse (A) zu beiden Seiten der Querschnittsverjüngung (11) einen gleichen Querschnitt aufweist.

5. Vorrichtung nach einem der vorhergehenden Ansprüche,
wobei der Ventilstößel (10) einen sich zumindest teilweise entlang der Längsachse (A) erstreckenden inneren Hohlraum (13) aufweist,
wobei der Ventilstößel (10) mindestens eine Spülbohrung (12) aufweist, die den inneren Hohlraum (13) des Ventilstößels (10) mit dem Reinigungsraum (39) fluidtechnisch verbindet,
wobei vorzugsweise der innere Hohlraum (13) mit einer Reinigungsrücklaufleitung (42) fluidtechnisch verbunden und/oder verbindbar ist.

6. Vorrichtung nach einem der vorhergehenden Ansprüche,
wobei der Füllgutdurchflussraum (31) mit einer Füllgutzulaufleitung (32) und einer Reinigungszulaufleitung (32) verbunden und/oder verbindbar ist, wobei vorzugsweise die Füllgutzulaufleitung und die Reinigungszulaufleitung zumindest abschnittsweise integral ausgebildet sind.

7. Vorrichtung nach einem der vorhergehenden Ansprüche,
wobei der Ventilstößel (10) relativ zur ersten Ventilstößeldichtung (21) bewegbar ist, und/oder
wobei die erste Ventilstößeldichtung (21) mit dem Gehäuse (30), insbesondere kraftund/oder formschlüssig, verbunden ist, wobei vorzugsweise die erste Ventilstößeldichtung (21) als dynamische Stangendichtung ausgebildet ist.

8. Vorrichtung nach einem der vorhergehenden Ansprüche,
wobei die zweite Ventilstößeldichtung (22) in Form eines Faltenbalgs ausgebildet ist,
wobei der Faltenbalg (22) ein erstes Ende und ein zweites Ende aufweist,
wobei der Verbindungsabschnitt (22a) das erste Ende des Faltenbalgs (22) ausbildet, und wobei der Faltenbalg (22) mit dem Verbindungsabschnitt (22a) mit dem Ventilstößel verbunden ist,
wobei vorzugsweise das zweite Ende des Faltenbalgs (22) mit dem Gehäuse (30) verbunden ist.

9. Vorrichtung nach einem der vorhergehenden Ansprüche 5-8,
wobei die mindestens eine Spülbohrung (12) bezogen auf die Längsachse (A) zwischen der ersten Ventilstößeldichtung (21) und dem Verbindungsabschnitt (22a) der zweiten Ventilstößeldichtung (22) angeordnet ist, insbesondere für jede Betriebsstellung des Ventilstößels (10) aufgrund seiner Beweglichkeit entlang der Längsachse (A).

10. Vorrichtung nach einem der vorhergehenden Ansprüche, umfassend
- eine Reckstange (60), die sich zumindest abschnittsweise innerhalb des Ventilstößels (10), und vorzugsweise entlang der Längsachse (A), erstreckt, wobei die Reckstange (60), vorzugsweise entlang der Längsachse (A), in den Vorformling (90) hinein bewegbar ist, um den Vorformling (90) entlang seiner Längsachse zu recken,
wobei vorzugsweise eine Reckstangendichtung (61) zwischen der Reckstange (60) und dem Ventilstößel (10) angeordnet ist, wobei die Reckstangendichtung (61) vorzugsweise einen auslassseitigen Raum (65) von dem inneren Hohlraum (13) trennt.

11. Vorrichtung nach einem der vorhergehenden Ansprüche,
wobei in dem Bereich, in dem die Reckstange (60) innerhalb des Ventilstößels (10) verläuft, der innere Hohlraum (13) zwischen der Reckstange (60) und dem Ventilstößel (10) ausgebildet ist.

12. Anlage zum Herstellen von mit flüssigem Füllgut befüllten Behältern aus thermisch konditionierten Vorformlingen (90) mittels Einleiten eines Füllguts unter Druck in die Vorformlinge (90) mit einer Vorrichtung (1) nach einem der vorhergehenden Ansprüche, vorzugsweise umfassend mehrere Form- und Füllstationen, wobei jede der Form- und Füllstationen eine Vorrichtung (1) nach einem der vorhergehenden Ansprüche aufweist.

13. Verfahren (100) zum Reinigen einer Vorrichtung zum Herstellen eines mit flüssigem Füllgut befüllten Behälters aus einem thermisch konditionierten Vorformling (90), umfassend die folgenden Schritte:
- Bereitstellen (110) einer Vorrichtung (1), insbesondere einer Vorrichtung nach einem der Ansprüche 1-11, zum Herstellen eines mit flüssigem Füllgut befüllten Behälters aus einem thermisch konditionierten Vorformling (90), umfassend
∘ ein Füllventil (50), aufweisend einen Ventilstößel (10) und ein Gehäuse (30), wobei der Ventilstößel (10) sich entlang einer Längsachse (A) und zumindest teilweise innerhalb des Gehäuses (30) erstreckt und entlang der Längsachse (A) bewegbar ist, wobei der Ventilstößel (10) einen sich zumindest teilweise entlang der Längsachse (A) erstreckenden inneren Hohlraum (13) aufweist,
∘ eine erste Ventilstößeldichtung (21), die zwischen dem Ventilstößel (10) und dem Gehäuse (30) angeordnet ist und die einen Füllgutdurchflussraum (31) des Füllventils (50) von einem Reinigungsraum (39) trennt,
∘ und eine zweite Ventilstößeldichtung (22), die einen Verbindungsabschnitt (22a) aufweist, der mit dem Ventilstößel (10) verbunden ist, wobei zwischen der zweiten Ventilstößeldichtung (22) und dem Ventilstößel (10) der Reinigungsraum (39) ausgebildet ist,
- Bewegen (120) des Ventilstößels (10) in eine die Dichtwirkung der ersten Ventilstößeldichtung (21) aufhebende und die Trennung zwischen dem Füllgutdurchflussraum (31) des Füllventils (50) und dem Reinigungsraum (39) aufhebende Position,
- Durchführen (130) eines Reinigungsprozesses,
∘ wobei ein Reinigungsmittel unter Druck in den Füllgutdurchflussraum (31) eingeführt wird und von dem Füllgutdurchflussraum (31) entlang der ersten Ventilstößeldichtung (21) in den Reinigungsraum (39) geführt wird, wobei vorzugsweise das Reinigungsmittel von dem Reinigungsraum (39) in den inneren Hohlraum (13) geführt wird und durch den inneren Hohlraum (13) über eine Reinigungsrücklaufleitung (42) aus der Vorrichtung (1) herausgeführt wird,
∘ oder wobei ein Reinigungsmittel unter Druck in eine Reinigungsrücklaufleitung (42) eingeführt wird und von der Reinigungsrücklaufleitung (42) in den inneren Hohlraum (13) geführt wird, wobei das Reinigungsmittel von dem inneren Hohlraum (13) in den Reinigungsraum (39) geführt wird und entlang der ersten Ventilstößeldichtung (21) in den Füllgutdurchflussraum (31) geführt wird, wobei das Reinigungsmittel vorzugsweise über eine Füllgutzulaufleitung (32) aus der Vorrichtung (1) herausgeführt wird.

14. Verfahren nach dem vorhergehenden Anspruch,
wobei der Druck, bei dem das Reinigungsmittel unter Druck in den Füllgutdurchflussraum (31) eingeführt wird, geringer ist, vorzugsweise um ein Vielfaches geringer ist, als der Druck, der beim Einleiten von Füllgut in den Vorformling (90) anliegt,
wobei vorzugsweise der Druck, bei dem das Reinigungsmittel in den Füllgutdurchflussraum (31) eingeführt wird, mindestens 1 bar beträgt und vorzugsweise höchstens 10 bar, besonders bevorzugt höchstens 8 bar, insbesondere höchstens 6 bar, beträgt,
wobei vorzugsweise der Druck, der beim Einleiten von Füllgut in den Vorformling (90) anliegt, mindestens 10 bar, besonders bevorzugt mindestens 15 bar, beträgt und vorzugsweise höchstens 30 bar, besonders bevorzugt höchstens 25 bar, beträgt.

15. Verwendung einer Vorrichtung nach einem der Ansprüche 1-11 und/oder einer Anlage nach Anspruch 12 zum Herstellen von mit flüssigem Füllgut befüllten Behältern aus thermisch konditionierten Vorformlingen (90) mittels Einleiten eines Füllguts unter Druck in die Vorformlinge (90), insbesondere zum Herstellen von mit flüssigem Füllgut, beispielsweise Trinkwasser, befüllten Flaschen aus einem thermoplastischen Material, insbesondere umfassend oder bestehend aus PET.

## Claims

1. Device (1) for producing a container filled with liquid product from a thermally conditioned preform (90), comprising
- a filling valve (50) for introducing the product under pressure into the preform (90), wherein the filling valve (50) has a valve body (14) that is movable between a sealing position, in which no fluid connection exists between a product flow chamber (31) of the filling valve (50) and the preform (90), and a release position, in which a fluid connection exists between the product flow chamber (31) of the filling valve (50) and the preform (90),
- wherein the filling valve (50) has a valve tappet (10) and a housing (30), wherein the valve tappet (10) extends along a longitudinal axis (A) and at least partially within the housing (30) and is movable along the longitudinal axis (A), wherein the valve tappet (10) is configured to adjust the valve body (14) of the filling valve (50), in particular by movement of the valve tappet (10) along the longitudinal axis (A), between the sealing position and the release position,
- a first valve tappet seal (21) which is arranged between the valve tappet (10) and the housing (30) and which separates the product flow chamber (31) from a cleaning chamber (39),
**characterized by**
- a second valve tappet seal (22) which has a connecting portion (22a) connected to the valve tappet (10), wherein the cleaning chamber (39) is formed between the second valve tappet seal (22) and the valve tappet (10),
- wherein the valve tappet (10) is movable into a position that eliminates the sealing effect of the first valve tappet seal (21) and eliminates the separation between the product flow chamber (31) and the cleaning chamber (39).

2. Device according to the preceding claim,
wherein the valve tappet (10) has a cross-sectional constriction (11) which is arranged and configured to fluidically connect the product flow chamber (31) and the cleaning chamber (39) with one another in the position of the valve tappet (10) eliminating the sealing effect of the first valve tappet seal (21).

3. Device according to one of the preceding claims,
wherein the cross-sectional constriction (11) of the valve tappet (10) is arranged in the region of the product flow chamber (31) in the sealing position of the valve body (14), and preferably in the release position of the valve body (14), and is in particular surrounded by the product flow chamber (31),
and/or wherein the cross-sectional constriction (11) of the valve tappet (10) is arranged at a distance from the first valve tappet seal (21) in each case in the sealing position of the valve body (14) and in the release position of the valve body (14),
and/or wherein the cross-sectional constriction (11) of the valve tappet (10) is arranged in the region of the first valve tappet seal (21) in the eliminating position of the valve tappet (10), such that in this eliminating position the first valve tappet seal (21) no longer has any sealing effect, at least in part, in the region of the cross-sectional constriction (11), i.e. the cross-sectional constriction (11) bridges the first valve tappet seal (21).

4. Device according to one of the preceding claims,
wherein the valve tappet (10) has an identical cross section on both sides of the cross-sectional constriction (11) in the direction of the longitudinal axis (A).

5. Device according to one of the preceding claims,
wherein the valve tappet (10) has an inner cavity (13) extending at least partially along the longitudinal axis (A),
wherein the valve tappet (10) has at least one flushing bore (12) which fluidically connects the inner cavity (13) of the valve tappet (10) to the cleaning chamber (39),
wherein preferably the inner cavity (13) is fluidically connected and/or connectable to a cleaning return line (42).

6. Device according to one of the preceding claims,
wherein the product flow chamber (31) is connected and/or connectable to a product supply line (32) and a cleaning supply line (32), wherein preferably the product supply line and the cleaning supply line are formed integrally at least in sections.

7. Device according to one of the preceding claims,
wherein the valve tappet (10) is movable relative to the first valve tappet seal (21), and/or
wherein the first valve tappet seal (21) is connected to the housing (30), in particular in a force-fitting and/or form-fitting manner, wherein preferably the first valve tappet seal (21) is configured as a dynamic rod seal.

8. Device according to one of the preceding claims,
wherein the second valve tappet seal (22) is configured in the form of a bellows,
wherein the bellows (22) has a first end and a second end,
wherein the connecting portion (22a) forms the first end of the bellows (22), and wherein the bellows (22) is connected to the valve tappet by the connecting portion (22a),
wherein preferably the second end of the bellows (22) is connected to the housing (30).

9. Device according to one of the preceding claims 5 to 8,
wherein the at least one flushing bore (12) is arranged, with respect to the longitudinal axis (A), between the first valve tappet seal (21) and the connecting portion (22a) of the second valve tappet seal (22), in particular for every operating position of the valve tappet (10) owing to its mobility along the longitudinal axis (A).

10. Device according to one of the preceding claims, comprising
- a stretch rod (60) which extends at least in sections within the valve tappet (10), and preferably along the longitudinal axis (A), wherein the stretch rod (60) is movable, preferably along the longitudinal axis (A), into the preform (90) in order to stretch the preform (90) along its longitudinal axis,
wherein preferably a stretch rod seal (61) is arranged between the stretch rod (60) and the valve tappet (10), wherein the stretch rod seal (61) preferably separates an outletside space (65) from the inner cavity (13).

11. Device according to one of the preceding claims,
wherein, in the region in which the stretch rod (60) extends within the valve tappet (10), the inner cavity (13) is formed between the stretch rod (60) and the valve tappet (10).

12. Installation for producing containers filled with liquid product from thermally conditioned preforms (90) by introducing a product under pressure into the preforms (90), with a device (1) according to any one of the preceding claims, preferably comprising a plurality of moulding and filling stations, wherein each of the moulding and filling stations has a device (1) according to any one of the preceding claims.

13. Method (100) for cleaning a device for producing a container filled with liquid product from a thermally conditioned preform (90), comprising the following steps:
- providing (110) a device (1), in particular a device according to any one of claims 1 to 11, for producing a container filled with liquid product from a thermally conditioned preform (90), comprising
∘ a filling valve (50) having a valve tappet (10) and a housing (30), wherein the valve tappet (10) extends along a longitudinal axis (A) and at least partially within the housing (30) and is movable along the longitudinal axis (A), wherein the valve tappet (10) has an inner cavity (13) extending at least partially along the longitudinal axis (A),
∘ a first valve tappet seal (21) which is arranged between the valve tappet (10) and the housing (30) and which separates a product flow chamber (31) of the filling valve (50) from a cleaning chamber (39),
∘ and a second valve tappet seal (22) which has a connecting portion (22a) connected to the valve tappet (10), wherein the cleaning chamber (39) is formed between the second valve tappet seal (22) and the valve tappet (10),
- moving (120) the valve tappet (10) into a position that eliminates the sealing effect of the first valve tappet seal (21) and eliminates the separation between the product flow chamber (31) of the filling valve (50) and the cleaning chamber (39),
- carrying out (130) a cleaning process,
∘ wherein a cleaning agent is introduced under pressure into the product flow chamber (31) and is guided from the product flow chamber (31) along the first valve tappet seal (21) into the cleaning chamber (39), wherein preferably the cleaning agent is guided from the cleaning chamber (39) into the inner cavity (13) and is guided out of the device (1) through the inner cavity (13) via a cleaning return line (42),
∘ or wherein a cleaning agent is introduced under pressure into a cleaning return line (42) and is guided from the cleaning return line (42) into the inner cavity (13), wherein the cleaning agent is guided from the inner cavity (13) into the cleaning chamber (39) and is guided along the first valve tappet seal (21) into the product flow chamber (31), wherein the cleaning agent is preferably guided out of the device (1) via a product supply line (32).

14. Method according to the preceding claim,
wherein the pressure at which the cleaning agent is introduced under pressure into the product flow chamber (31) is lower, preferably lower by a multiple, than the pressure applied when introducing product into the preform (90),
wherein preferably the pressure at which the cleaning agent is introduced into the product flow chamber (31) is at least 1 bar and preferably at most 10 bar, particularly preferably at most 8 bar, in particular at most 6 bar,
wherein preferably the pressure applied when introducing product into the preform (90) is at least 10 bar, particularly preferably at least 15 bar, and preferably at most 30 bar, particularly preferably at most 25 bar.

15. Use of a device according to one of claims 1 to 11 and/or an installation according to claim 12 for producing containers filled with liquid product from thermally conditioned preforms (90) by introducing a product under pressure into the preforms (90), in particular for producing bottles filled with liquid product, for example drinking water, from a thermoplastic material, in particular comprising or consisting of PET.

## Revendications

1. Dispositif (1) de fabrication d'un récipient rempli de matière de remplissage liquide à partir d'une préforme (90) conditionnée thermiquement, comprenant
- une soupape de remplissage (50) pour l'introduction de la matière de remplissage sous pression dans la préforme (90), dans lequel la soupape de remplissage (50) présente un corps de soupape (14), qui peut être déplacé entre une position d'étanchéité, dans laquelle il n'y a pas de liaison fluidique entre une chambre d'écoulement de matière de remplissage (31) de la soupape de remplissage (50) et la préforme (90), et une position de libération, dans laquelle il y a une liaison fluidique entre la chambre d'écoulement de matière de remplissage (31) de la soupape de remplissage (50) et la préforme (90),
- dans lequel la soupape de remplissage (50) présente un poussoir de soupape (10) et un logement (30), dans lequel le poussoir de soupape (10) s'étend le long d'un axe longitudinal (A) et au moins en partie à l'intérieur du logement (30) et peut être déplacé le long de l'axe longitudinal (A), dans lequel le poussoir de soupape (10) est réalisé pour déplacer le corps de soupape (14) de la soupape de remplissage (50), en particulier par déplacement du poussoir de soupape (10) le long de l'axe longitudinal (A), entre la position d'étanchéité et la position de libération,
- un premier joint de poussoir de soupape (21), qui est disposé entre le poussoir de soupape (10) et le logement (30) et qui sépare la chambre d'écoulement de matière de remplissage (31) d'une chambre de nettoyage (39),
**caractérisé par**
- un deuxième joint de poussoir de soupape (22), qui présente une section de liaison (22a), qui est reliée au poussoir de soupape (10), dans lequel la chambre de nettoyage (39) est réalisée entre le deuxième joint de poussoir de soupape (22) et le poussoir de soupape (10),
- dans lequel le poussoir de soupape (10) peut être déplacé dans une position annulant l'effet d'étanchéité du premier joint de poussoir de soupape (21) et annulant la séparation entre la chambre d'écoulement de matière de remplissage (31) et la chambre de nettoyage (39).

2. Dispositif selon la revendication précédente,
dans lequel le poussoir de soupape (10) présente un rétrécissement de section transversale (11), qui est disposé et réalisé pour relier l'une à l'autre de manière fluidique la chambre d'écoulement de matière de remplissage (31) et la chambre de nettoyage (39) dans la position du poussoir de soupape (10) annulant l'effet d'étanchéité du premier joint de poussoir de soupape (21).

3. Dispositif selon l'une quelconque des revendications précédentes,
dans lequel le rétrécissement de section transversale (11) du poussoir de soupape (10) dans la position d'étanchéité du corps de soupape (14), et de préférence dans la position de libération du corps de soupape (14), est disposé dans la zone de la chambre d'écoulement de matière de remplissage (31), et en particulier est entouré par la chambre d'écoulement de matière de remplissage (31),
et/ou dans lequel le rétrécissement de section transversale (11) du poussoir de soupape (10) dans la position d'étanchéité du corps de soupape (14) et dans la position de libération du corps de soupape (14) est disposé respectivement à distance du premier joint de poussoir de soupape (21),
et/ou dans lequel le rétrécissement de section transversale (11) du poussoir de soupape (10) dans la position d'annulation du poussoir de soupape (10) est disposé dans la zone du premier joint de poussoir de soupape (21) de sorte que dans cette position d'annulation, le premier joint de poussoir de soupape (21) dans la zone du rétrécissement de section transversale (11) ne présente au moins en partie plus d'effet d'étanchéité, donc que le rétrécissement de section transversale (11) ponte le premier joint de poussoir de soupape (21).

4. Dispositif selon l'une quelconque des revendications précédentes,
dans lequel le poussoir de soupape (10) présente une même section transversale dans la direction de l'axe longitudinal (A) des deux côtés du rétrécissement de section transversale (11).

5. Dispositif selon l'une quelconque des revendications précédentes,
dans lequel le poussoir de soupape (10) présente une cavité interne (13) s'étendant au moins en partie le long de l'axe longitudinal (A),
dans lequel le poussoir de soupape (10) présente au moins un perçage de rinçage (12), qui relie de manière fluidique la cavité interne (13) du poussoir de soupape (10) à la chambre de nettoyage (39),
dans lequel de préférence la cavité interne (13) est reliée et/ou peut être reliée de manière fluidique à une conduite de retour de nettoyage (42).

6. Dispositif selon l'une quelconque des revendications précédentes,
dans lequel la chambre d'écoulement de matière de remplissage (31) est reliée et/ou peut être reliée à une conduite d'arrivée de matière de remplissage (32) et à une conduite d'arrivée de nettoyage (32), dans lequel de préférence la conduite d'arrivée de matière de remplissage et la conduite d'arrivée de nettoyage sont réalisées d'un seul tenant au moins par section.

7. Dispositif selon l'une quelconque des revendications précédentes,
dans lequel le poussoir de soupape (10) peut être déplacé par rapport au premier joint de poussoir de soupape (21), et/ou
dans lequel le premier joint de poussoir de soupape (21) est relié au logement (30), en particulier par force et/ou par complémentarité de forme, dans lequel de préférence le premier joint de poussoir de soupape (21) est réalisé sous forme de joint de tige dynamique.

8. Dispositif selon l'une quelconque des revendications précédentes,
dans lequel le deuxième joint de poussoir de soupape (22) est réalisé sous la forme d'un soufflet,
dans lequel le soufflet (22) présente une première extrémité et une deuxième extrémité,
dans lequel la section de liaison (22a) forme la première extrémité du soufflet (22), et dans lequel le soufflet (22) est relié avec la section de liaison (22a) au poussoir de soupape,
dans lequel de préférence la deuxième extrémité du soufflet (22) est reliée au logement (30).

9. Dispositif selon l'une quelconque des revendications précédentes 5-8,
dans lequel l'au moins un perçage de rinçage (12) est disposé par rapport à l'axe longitudinal (A) entre le premier joint de poussoir de soupape (21) et la section de liaison (22a) du deuxième joint de poussoir de soupape (22), en particulier pour chaque position de fonctionnement du poussoir de soupape (10) en raison de sa mobilité le long de l'axe longitudinal (A).

10. Dispositif selon l'une quelconque des revendications précédentes, comprenant
- une tige d'étirage (60), qui s'étend au moins par section à l'intérieur du poussoir de soupape (10), et de préférence le long de l'axe longitudinal (A), dans lequel la tige d'étirage (60) peut être déplacée, de préférence le long de l'axe longitudinal (A), dans la préforme (90) afin d'étirer la préforme (90) le long de son axe longitudinal,
dans lequel de préférence un joint de tige d'étirage (61) est disposé entre la tige d'étirage (60) et le poussoir de soupape (10), dans lequel le joint de tige d'étirage (61) sépare de préférence une chambre côté sortie (65) de la cavité interne (13).

11. Dispositif selon l'une quelconque des revendications précédentes,
dans lequel dans la zone, dans laquelle la tige d'étirage (60) s'étend à l'intérieur du poussoir de soupape (10), la cavité interne (13) est réalisée entre la tige d'étirage (60) et le poussoir de soupape (10).

12. Système de fabrication de récipients remplis de matière de remplissage liquide à partir de préformes (90) conditionnées thermiquement par introduction d'une matière de remplissage sous pression dans les préformes (90) avec un dispositif (1) selon l'une quelconque des revendications précédentes, de préférence comprenant plusieurs stations de moulage et de remplissage, dans lequel chacune des stations de moulage et de remplissage présente un dispositif (1) selon l'une quelconque des revendications précédentes.

13. Procédé (100) de nettoyage d'un dispositif de fabrication d'un récipient rempli de matière de remplissage liquide à partir d'une préforme (90) conditionnée thermiquement, comprenant les étapes suivantes :
- mise à disposition (110) d'un dispositif (1), en particulier d'un dispositif selon l'une quelconque des revendications 1-11, de fabrication d'un récipient rempli de matière de remplissage liquide à partir d'une préforme (90) conditionnée thermiquement, comprenant
∘ une soupape de remplissage (50), présentant un poussoir de soupape (10) et un logement (30), dans lequel le poussoir de soupape (10) s'étend le long d'un axe longitudinal (A) et au moins en partie à l'intérieur du logement (30) et peut être déplacé le long de l'axe longitudinal (A), dans lequel le poussoir de soupape (10) présente une cavité interne (13) s'étendant au moins en partie le long de l'axe longitudinal (A),
∘ un premier joint de poussoir de soupape (21), qui est disposé entre le poussoir de soupape (10) et le logement (30) et qui sépare une chambre d'écoulement de matière de remplissage (31) de la soupape de remplissage (50) d'une chambre de nettoyage (39),
∘ et un deuxième joint de poussoir de soupape (22), qui présente une section de liaison (22a), qui est reliée au poussoir de soupape (10), dans lequel la chambre de nettoyage (39) est réalisée entre le deuxième joint de poussoir de soupape (22) et le poussoir de soupape (10),
- déplacement (120) du poussoir de soupape (10) dans une position annulant l'effet d'étanchéité du premier joint de poussoir de soupape (21) et annulant la séparation entre la chambre d'écoulement de matière de remplissage (31) de la soupape de remplissage (50) et la chambre de nettoyage (39),
- réalisation (130) d'un processus de nettoyage,
∘ dans lequel un produit de nettoyage est introduit sous pression dans la chambre d'écoulement de matière de remplissage (31) et est guidé de la chambre d'écoulement de matière de remplissage (31) le long du premier joint de poussoir de soupape (21) dans la chambre de nettoyage (39), dans lequel de préférence le produit de nettoyage est guidé de la chambre de nettoyage (39) à la cavité interne (13) et est guidé hors du dispositif (1) à travers la cavité interne (13) par le biais d'une conduite de retour de nettoyage (42),
∘ ou dans lequel un produit de nettoyage est introduit sous pression dans une conduite de retour de nettoyage (42) et est guidé de la conduite de retour de nettoyage (42) à la cavité interne (13), dans lequel le produit de nettoyage est guidé de la cavité interne (13) à la chambre de nettoyage (39) et est guidé le long du premier joint de poussoir de soupape (21) dans la chambre d'écoulement de matière de remplissage (31), dans lequel le produit de nettoyage est guidé hors du dispositif (1) de préférence par le biais d'une conduite d'arrivée de matière de remplissage (32).

14. Procédé selon la revendication précédente,
dans lequel la pression, à laquelle le produit de nettoyage est introduit sous pression dans la chambre d'écoulement de matière de remplissage (31), est inférieure, de préférence plusieurs fois inférieure, à la pression qui s'applique lors de l'introduction de matière de remplissage dans la préforme (90),
dans lequel de préférence la pression, à laquelle le produit de nettoyage est introduit dans la chambre d'écoulement de matière de remplissage (31), est d'au moins 1 bar et de préférence de maximum 10 bar, de manière particulièrement préférée de maximum 8 bar, en particulier de maximum 6 bar,
dans lequel de préférence la pression, qui s'applique lors de l'introduction de matière de remplissage dans la préforme (90), est d'au moins 10 bar, de manière particulièrement préférée d'au moins 15 bar, et est de préférence de maximum 30 bar, de manière particulièrement préférée de maximum 25 bar.

15. Utilisation d'un dispositif selon l'une quelconque des revendications 1-11 et/ou d'un système selon la revendication 12 pour la fabrication de récipients remplis de matière de remplissage liquide à partir de préformes (90) conditionnées thermiquement par introduction d'une matière de remplissage sous pression dans les préformes (90), en particulier pour la fabrication de bouteilles remplies de matière de remplissage liquide, par exemple d'eau potable, à partir d'un matériau thermoplastique, en particulier comprenant ou se composant de PET.
